**Europäisches Patentamt**

**European Patent Office**

**Office européen des brevets**

(19)

(11) **EP 1 282 539 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(21) Anmeldenummer: **01919416.6**

(22) Anmeldetag: **02.04.2001**

(51) Int Cl.[7]: **B60K 31/00**

(86) Internationale Anmeldenummer:
**PCT/EP01/03711**

(87) Internationale Veröffentlichungsnummer:
**WO 01/085486 (15.11.2001 Gazette 2001/46)**

(54) **VERFAHREN UND VORRICHTUNG ZUR REGELUNG EINES ANDOCKVORGANGES ZWISCHEN ZWEI KRAFTFAHRZEUGEN**

METHOD AND DEVICE FOR REGULATING A DOCKING PROCESS BETWEEN TWO AUTOMOBILES

PROCEDE ET DISPOSITIF DE REGLAGE D'UNE OPERATION D'AMARRAGE ENTRE DEUX VEHICULES AUTOMOBILES

(84) Benannte Vertragsstaaten:
**DE ES FR GB IT**

(30) Priorität: **11.05.2000 DE 10023067**

(43) Veröffentlichungstag der Anmeldung:
**12.02.2003 Patentblatt 2003/07**

(73) Patentinhaber: **Volkswagen Aktiengesellschaft 38436 Wolfsburg (DE)**

(72) Erfinder:
• **ANDREAS, Peter 38518 Gifhorn (DE)**
• **RUCHATZ, Thomas 38165 Lehre (DE)**
• **RABBA, Heiko 38102 Braunschweig (DE)**
• **BIZENBERGER, Thomas 38116 Braunschweig (DE)**

(56) Entgegenhaltungen:
DE-A- 19 650 168          DE-A- 19 936 586
US-A- 5 165 497           US-A- 6 044 321

**Beschreibung**

Die Erfindung betrifft ein Verfahren und eine Vorrichtung zur Regelung der Geschwindigkeit eines Kraftfahrzeuges und des Abstandes eines Kraftfahrzeuges zu mindestens einem vorausfahrenden Kraftfahrzeug während eines Andockvorganges für eine automatische Distanzregelung, wobei das Kraftfahrzeug eine größere Fahrgeschwindigkeit als das vorausfahrende Kraftfahrzeug aufweist, gemäß dem Oberbegriff von Anspruch 1 bzw 13.

Derartige Verfahren und Vorrichtungen sind im Stand oder Technik allgemein bekannt.

Bei den aus dem Stand der Technik bekannten Verfahren zur automatischen Distanzregelung (ADR) ist es bekannt, daß mit Hilfe einer einen Abstandssensor aufweisenden Erfassungseinrichtung zumindest die Geschwindigkeit v des Kraftfahrzeuges, die Relativgeschwindigkeit $V_{rel}$ und der Abstand $S_{ist}$ zu dem vorausfahrenden Kraftfahrzeug bestimmt werden. Weiterhin wird der Wert einer Normalbeschleunigung $a_n$ für ein Abbremsen des Kraftfahrzeuges in Abhängigkeit von der Differenz zwischen einem vorgegebenen Normalfolgesollabstand $S_n$ und dem Abstand $S_{ist}$ und von der Relativgeschwindigkeit $V_{rel}$ berechnet wird. Mit der Normalbeschleunigung, die für ein Abbremsen negativ ist, wird dann das Kraftfahrzeug abgebremst, um das Kraftfahrzeug auf den Normalfolgesollabstand $s_n$ zu regeln.

Ist jedoch die Retativgeschwindigkeit zwischen beiden Kraftfahrzeugen zu groß, so reicht die von der automatischen Distanzregelung ausgeübte Bremswirkung nicht aus, um ein Unterschreiten des Folgesollabstandes, also des Sicherheitsabstandes oder sogar einen Auffahrunfall zu vermeiden. Der Fahrer ist dann gezwungen, aktiv einzugreifen und eine größere Bremswirkung auszulösen. Dieses Problem tritt insbesondere dann auf, wenn die Regelgrößen für die automatische Distanzregelung auf einen relativ großen Normalfolgesollabstand $s_n$ und auf geringe Werte von zulässigen Normalbeschleunigungen $a_n$ eingestellt ist.

Ein gattungsgemäßes Verfahren ist aus dem Stand der Technik der EP 0 846 587 A1 bekannt, bei dem die Abstände zu einem vor dem Kraftfahrzeug erfaßten Objekt von einem Abstandssensor dedektiert und einer Regelungseinrichtung zugeführt werden, die zumindest in Abhängigkeit eines zumindest aus der momentanen Fahrgeschwindigkeit ermittelten Sollabstandes zum erfaßten Objekt und/oder einer vorgegebenen Sollgeschwindigkeit eine oder mehrere Stellgrößen zur Einstellung der Fahrgeschwindigkeit des Kraftfahrzeuges bildet.

Aus der US 5,165,497 ist weiterhin eine Steuerungsvorrichtung zur Einhaltung eines Sicherheitsabstandes für ein Kraftfahrzeug bekannt, das in einem Geschwindigkeitsbereich von 0 bis 120 km/h den Sicherheitsabstand zwischen dem Kraftfahrzeug und dem vorausfahrenden Kraftfahrzeug einstellt, um eine Kollision zu vermeiden. Die von der Steuervorrichtung durchgeführte Regelung geht soweit, daß dann, wenn das vorausfahrende Kraftfahrzeug anhält, das Kraftfahrzeug bis zum Stillstand abgebremst wird. Fährt danach das vorausfahrende Kraftfahrzeug erneut an, so wird das Kraftfahrzeug ebenfalls wieder angefahren. Somit entsteht eine Kopplung zwischen den Fahrzeugen, wobei erhebliche Beschleunigungswechsel auftreten können, die zu einem wenig komfortablen Fahrverhalten führen.

Ausgehend von diesem Stand der Technik liegt der Erfindung das technische Problem zugrunde, die Funktionsweise des gattungsgemäßen Verfahrens sowie der entsprechenden Vorrichtung weiter zu verbessern und ein komfortableres Fahrverhalten während des Andockvorganges zwischen zwei Kraftfahrzeugen zu ermöglichen.

Das zuvor aufgezeigte technische Problem wird erfindungsgemäß zunächst durch ein Verfahren gemäß Anspruch 1 dadurch gelöst, daß der Wert einer Grenzbeschleunigung $a_g$ für ein Abbremsen des Kraftfahrzeuges in Abhängigkeit von der Differenz zwischen einem vorgegebenen Grenzfolgesollabstand $s_g$ und dem Abstand $s_{ist}$ und von der Relativgeschwindigkeit $v_{rel}$ berechnet wird, daß der betragsmäßig größere der beiden Werte der Normalbeschleunigung $a_n$ und der Grenzbeschleunigung $a_g$ als anzuwendende Bremsbeschleunigung $a_b$ bestimmt wird, und daß das Kraftfahrzeug mit der Bremsbeschleunigung $a_b$ abgebremst wird. Dabei bedeuten Grenzbeschleunigung $a_g$ und Grenzfolgesollabstand $s_g$ Parameter, die für eine automatische Distanzregelung mit einem an der unteren Grenze liegenden Folgesollabstand bzw. mit einer an der oberen Grenze der anzuwendenen Beschleunigungswerte für eine automatische Distanzregelung liegen. Der geringste Folgesollabstand bzw. Sicherheitsabstand entspricht einer Folgezeit von ungefähr 0,9 sec, daß heißt, daß bei jeder Geschwindigkeit das Kraftfahrzeug dem vorausfahrenden Kraftfahrzeug in einem zeitlichen Abstand von mindestens 0,9 sec folgen soll. Die Begriffe Normalbeschleunigung $a_n$ und Normalfolgesollabstand $s_n$ bedeuten dagegen von den zuvor diskutierten Grenzwerten abweichende Parameter, die einer automatischen Distanzregelung mit größerem Sicherheitsabstand und niedrigeren maximalen Beschleunigungswerten entspricht.

Erfindungsgemäß ist erkannt worden, daß für die oben beschriebene problematische Fahrsituation, bei der die Relativgeschwindigkeit zwischen beiden Kraftfahrzeugen für die eingestellte "normale" automatische Distanzregelung nicht ausreicht, dadurch zumindest teilweise aufgefangen werden kann, daß parallel zur Berechnung der Normalbeschleunigung $a_n$ ebenfalls die Grenzbeschleunigung $a_g$ berechnet wird und daß die Grenzbeschleunigung $a_g$ dann zur Anwendung kommt, wenn ein Abbremsen des Kraftfahrzeuges mit der Normalbeschleunigung $a_n$ für ein Andocken des Kraftfahzeuges nicht ausreicht. Dabei wird nicht in jedem Fall ein Eingreifen des Fahrers des Kraftfahrzeuges verhindert, jedoch wird durch ein stärkeres Abbremsen als bei normaler automatischer Distanzregelung der Bereich der Fahrsituationen vergrößert, die von der automatischen Distanzregelung noch in komfortabler Weise ohne ein Eingreifen des Fahrers bewältigt werden kann.

In bevorzugter Weise steigt der Betrag der Normalbeschleunigung $a_n$ undloder der Grenzbeschleunigung $a_g$ mit steigender Relativgeschwindigkeit $v_{rel}$ bzw. mit fallendem Abstand $S_{ist}$ an. Das bedeutet, daß dann, wenn die Relativgeschwindigkeit $v_{rel}$ groß ist, die automatische Distanzregelung größere Beschleunigungswerte erzeugt, als es für kleinere Werte der Relativgeschwindigkeit $v_{rel}$ der Fall ist. Dasselbe gilt für die Situation, in der der Abstand $s_{ist}$ zwischen beiden Kraftfahrzeugen klein ist. Steigt dabei der Wert der Grenzbeschleunigung $a_g$ stärker als der Wert der Normalbeschleunigung $a_n$ an, so tritt die erfindungsgemäße Verfahrensweise ab den Parametern Relativgeschwindigkeit $v_{rel}$ und Abstand $s_{ist}$ ein, in dem die Grenzbeschleunigung $a_g$ größer als die Normalbeschleunigung $a_n$ ist

In weiter bevorzugter Weise wird die Normalbeschleunigung $a_n$ mit Hilfe eines Proportionalitätsreglers mit einem Kennfeld mit zwei Eingangsgrößen berechnet, nämlich der Relativgeschwindigkeit $v_{rel}$ und der Differenz zwischen dem Normalfolgesollabstand $s_n$ und dem aktuellen Abstand $s_{ist}$. Ebenso bevorzugt ist es, daß die Grenzbeschleunigung $a_g$ mit Hilfe eines Proportionalitätsreglers mit einem Kennfeld mit zwei Eingangsgrößen berechnet wird, nämlich der Relativgeschwindigkeit $v_{rel}$ und Differenz aus dem Grenzfolgesollabstand $s_g$ und dem aktuellen Abstand $s_{ist}$. Eine genauere mathematische Beschreibung eines Ausführungsbeispieles wird im folgenden anhand der Beschreibung der Zeichnung erläutert.

Weiterhin ist es bevorzugt, daß der Normalfolgesollabstand $s_n$ aus der Geschwindigkeit v des Kraftfahrzeuges und einer vorgegebenen Normalfolgezeit $t_n$ berechnet wird. Ebenso kann der Grenzfolgesollabstand $s_g$ aus der Geschwindigkeit v des Kraftfahrzeuges und einer vorgegebenen Grenzfolgezeit $t_g$ berechnet werden. Die Grenzfolgezeit $t_g$ ist bereits oben erwähnt worden und entspricht erfahrungsgemäß einem Wert von ungefähr 0,9 sec. Dagegen liegen typische Werte für die Normalfolgezeit $t_n$ im Bereich zwischen 0,9 und 4,0 sec, insbesondere bis 2,0 sec. Da eine Einstellung der Folgezeit durch den Fahrer intuitiv ist, findet diese Ausgestaltung der Einstellung des Folgeabstandes mit Hilfe einer Folgezeit häufig Anwendung.

Schließlich ist es bevorzugt, daß der zeitliche Verlauf der Bremsbeschleunigung $a_b$ des Kraftfahrzeuges beim Übergang zwischen der Normalbeschleunigung $a_n$ und Grenzbeschleunigung $a_g$ stetig ist, daß also kein sprunghafter Wechsel zwischen beiden Beschleunigungswerten auftritt. Dadurch wird der Komfort der automatischen Distanzregelung weiter erhöht, da kein Ruck in der Bewegung des Kraftfahrzeuges auftritt.

Das oben aufgezeigte technische Problem wird erfindungsgemäß auch durch eine Vorrichtung gemäß den Merkmalen des Anspruches 13 gelöst. Diese Vorrichtung wird anhand eines Ausführungsbeispieles im folgenden näher erläutert, wobei auf die beigefügte Zeichnung bezug genommen wird. In dieser Zeichnung zeigen

Fig. 1     ein Blockschaltbild eines Ausführungsbeispieles einer erfindungsgemäßen Vorrichtung und

Fig. 2     eine graphische Darstellung der funktionalen Verläufe der Normalbeschleunigung $a_n$ und der Grenzbeschleunigung $a_g$ für zwei verschiedene Abstände $s_{ist}(1)$ und $s_{ist}(2)$ zwischen den beiden Kraftfahrzeugen.

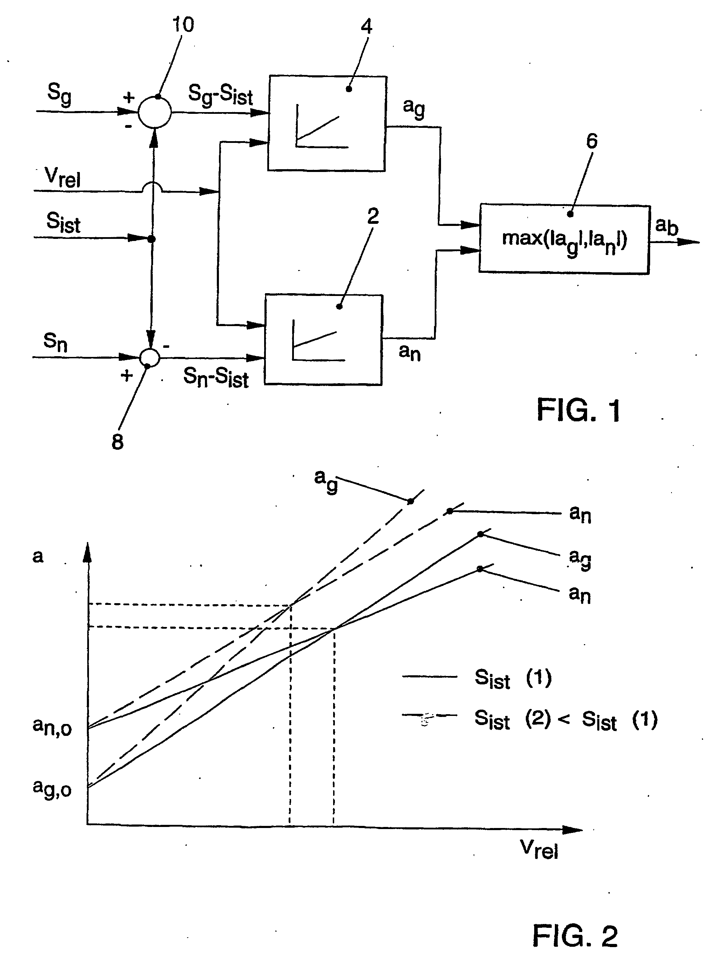

Fig. 1 zeigt eine erfindungsgemäße Vorrichtung zum Durchführen eines Verfahrens zur Regelung der Geschwindigkeit eines Kraftfahrzeuges und des Abstandes des Kraftfahrzeuges zu mindestens einem vorausfahrenden Kraftfahrzeug während eines Andockvorganges, wobei das Kraftfahrzeug eine größere Geschwindigkeit v als das vorausfahrende Kraftfahrzeug aufweist. Die Vorrichtung weist eine in der Fig. 1 nicht dargestellte Erfassungseinrichtung mit mindestens einem Abstandssensor für eine Bestimmung zumindest der Geschwindigkeit v des Kraftfahrzeuges, der Relativgeschwindigkeit $v_{rel}$ und des Abstandes $s_{ist}$ zu dem vorausfahrenden Kraftfahrzeug auf. Weiterhin weist die Vorrichtung eine Auswerteeinheit auf, die zu einem Teil in Fig. 1 dargestellt ist. Dazu weist die Fig. 1 einen ersten Proportionalitätsregler 2, der mit einem Kennfeld zur Berechnung einer Normalbeschfeunigung $a_n$ mit zwei Eingangsgrößen auf. Die beiden Eingangsgrößen sind zum einen die Relativgeschwindigkeit $v_{rel}$ und zum anderen die Differenz zwischen dem Normalfolgesollabstand $s_n$ und dem aktuellen Abstand $s_{ist}$. Mittels der beiden Eingangsgrößen berechnet der Proportionalitätsregler den damit korrespondierenden Wert der Normalbeschleunigung $a_n$ und gibt diesen aus.

Weiterhin weist die in Fig. 1 dargestellte Auswerteeinheit einen zweiten Proportionalitätsregler 4 mit einem Kennfeld zur Berechnung einer Grenzbeschleunigung $a_g$ auf, das ebenfalls mit zwei Eingangsgrößen arbeitet. Diese sind zum einen die Relativgeschwindigkeit $v_{rel}$ und die Differenz zwischen dem Grenzfolgesollabstand $s_g$ und dem aktuellen Abstand $s_{ist}$. Mit Hilfe dieser beiden Eingangsgrößen berechnet der Proportionalitätsregler 4 den korrespondierenden Wert der Grenzbeschleunigung $a_g$ und gibt diesen als Ausgangsgröße aus.

Weiterhin weist die Auswerteeinheit ein Vergleichselement 6 für eine Bestimmung des betragsmäßig größeren der beiden Werte der Normalbeschleunigung $a_n$ und der Grenzbeschleunigung $a_g$ auf, wobei als Ausgangsgröße der größere der beiden Werte als Bremsbeschleunigung $a_b$ ausgegeben wird. Dieser Wert wird dann vom Motor- und Bremsmanagement übernommen, um das Kraftfahrzeug abzubremsen.

Zur Bildung der Differenzen zwischen dem Normalfolgesollabstand $s_n$ bzw. dem Grenzfolgesollabstand $s_g$ mit dem aktuellen Abstand $s_{ist}$ sind übliche elektronische Differenzelemente 8 und 10 vorgesehen.

In Fig. 2 wird anhand von jeweils zwei Funktionsverläufen für die Normalbeschleunigung $a_n$ und die Grenzbeschleunigung $a_g$ für zwei verschiedene aktuelle Abstände $S_{ist}(1)$ und $s_{ist}(2)$ dargestellt.

Bei beiden Funktionen handelt es sich um lineare Funktionen, die entsprechend der Formel für die Normalbeschleunigung $a_n$ mit

$$a_n = a_{n,0} + a_{n,1} \cdot \frac{v_{rel}}{s_n - s_{ist}} \qquad \text{für } s_n - s_{ist} > \Delta s_0$$

und

$$a_n = a_{n,max} \qquad \text{für } s_n - s_{ist} \leq \Delta s_0.$$

Sowie für die Grenzbeschleunigung $a_g$ mit

$$a_g = a_{g,0} + a_{g,1} \cdot \frac{v_{rel}}{s_g - s_{ist}} \qquad \text{für } s_g - s_{ist} > \Delta s_1$$

und

$$a_g = a_{g,max} \qquad \text{für } s_g - s_{ist} \leq \Delta s_1$$

berechnet werden. Im wesentlichen handelt es sich somit um lineare Funktionsverläufe mit unterschiedlichen Offsets $a_{n,0}$ und $a_{g,0}$ sowie den linearen Steigungen $a_{n,1}$ bzw. $a_{g,1}$. Die Unterscheidungen mit den Werten $\Delta s_0$ und $\Delta s_1$, dienen dazu, daß dann, wenn die Differenz zwischen dem Normalfolgesollabstand $s_n$ bzw. dem Grenzfolgesollabstand $s_g$ und dem aktuellen Abstand $s_{ist}$ gegen 0 geht, ein maximaler Wert jeweils für die Normalbeschleunigung $a_n$ und die Grenzbeschleunigung $a_g$ verwendet wird. Dieser grenzwertige Verlauf ist in der graphischen Darstellung der Fig. 2 nicht dargestellt.

Aus den Formeln wird weiterhin deutlich, daß die Werte der Normalbeschleunigung $a_n$ und der Grenzbeschleunigung $a_g$ mit steigender Relativgeschwindigkeit $v_{rel}$ und mit kleiner werdendem Abstand für Werte oberhalb des Nomnalfolgesollabstandes $s_n$ bzw. des Grenzfolgesollabstandes $s_g$ ansteigt. Es wird hervorgehoben, daß es sich bei der angegebenen Formel nur um ein Ausführungsbeispiel handelt, das die Abhängigkeiten der Parameter untereinander darstellt. Selbstverständlich können andere Funktionsverläufe, insbesondere nichtlineare Funktionen Anwendung finden.

Die beiden Proportionalitätsregler 2 und 4 arbeiten mit Kennfeldern, die - wie oben beschrieben - mit jeweils zwei Eingangsgrößen arbeiten. Die Kennfelder bestehen aus einer Mehrzahl von Kurven, die exemplarisch für zwei verschiedene Abstände $s_{ist}$ in Fig. 2 ausschnittsweise dargestellt und somit charakterisiert werden. Betrachtet man zunächst für einen ersten Abstand $s_{ist}(1)$ den Verlauf der beiden Werte für die Normalbeschleunigung $a_n$ und die Grenzbeschleunigung $a_g$ in Abhängigkeit von der Relativgeschwindigkeit $v_{rel}$, so schneiden sich beide Geraden in einem Punkt der im Koordinatensystem der Fig. 2 mit gepunkteten Linien charakterisiert ist. Liegt die Relativgeschwindigkeit $v_{rel}$ niedriger als der Wert der Relativgeschwindigkeit für den Schnittpunkt, so kommt als größere der beiden Beschleunigungswerte der Wert der Normalbeschleunigung $a_n$ zur Anwendung. Für Relativgeschwindigkeiten $v_{rel}$ oberhalb des Wertes der Relativgeschwindigkeit, die den Schnittpunkt charakterisiert, kommt die Grenzbeschleunigung $a_g$ zur Anwendung.

Im Vergleich dazu sind die beiden Geraden für die Werte der Beschleunigungen $a_n$ und $a_g$ für einen zweiten Abstand $s_{ist}(2)$ dargestellt, der kleiner als der Abstand $s_{ist}(1)$ ist. Da der Abstand zwischen den beiden Kraftfahrzeugen in dieser Situation geringer ist, muß insgesamt eine größere Bremswirkung erzielt werden, um ein Unterschreiten des Grenzfolgesollabstandes $s_g$ zu verhindern. Daher liegen die gestrichelten Geraden oberhalb der durchgezogenen Geraden in Fig. 2. Der Schnittpunkt zwischen beiden gestrichelten Linien liegt bei niedrigeren Relativgeschwindigkeiten $v_{rel}$ sowie bei einem größerem Wert für die Beschleunigung a. Somit wird für den geringeren Abstand $s_{ist}2)$ die Grenzbeschleunigung $a_g$ eher angewendet, als es beim ersten, größeren Abstand $s_{ist}(1)$ der Fall ist. Die Folge ist also, daß das Kraftfahrzeug beim geringeren Abstand $s_{ist}(2)$ stärker als beim größeren Abstand $s_{ist}$ (1) abgebremst wird.

**Patentansprüche**

1. Verfahren zur Regelung der Geschwindigkeit eines Kraftfahrzeuges und des Abstandes des Kraftfahrzeuges zu mindestens einem vorausfahrenden Kraftfahrzeug während eines Andockvorganges für eine automatische Distanzregelung, wobei das Kraftfahrzeug eine größere Fahrgeschwindigkeit (v) als das vorausfahrende Kraftfahrzeug aufweist,

   - bei dem mit Hilfe einer einen Abstandssensor aufweisenden Erfassungseinrichtung zumindest die Geschwindigkeit (v) des Kraftfahrzeuges, die Relativgeschwindigkeit ($v_{rel}$) und der Abstand ($s_{ist}$) zu dem vorausfahrenden Kraftfahrzeug bestimmt werden, und

   - bei dem der Wert einer Normalbeschleunigung ($a_n$) für ein Abbremsen des Kraftfahrzeuges in Abhängigkeit von der Differenz zwischen einem vorgegebenen Normalfolgesollabstand ($s_n$) und dem Abstand ($s_{ist}$) und von der Relativgeschwindigkeit ($v_{rel}$) berechnet wird,

**dadurch gekennzeichnet,**

- **daß** der Wert einer Grenzbeschleunigung ($a_g$) - die eine obere Grenze der anzuwendenden Beschleunigungswerte für eine automatische Distanzregelung darstellt für ein Abbremsen des Kraftfahrzeuges in Abhängigkeit von der Differenz zwischen einem vorgegebenen Grenzfolgesollabstand ($s_g$) - der an der unteren Grenze eines für eine automatische Distanzregelung anzuwendenden Folgesollabstands liegt - und dem Abstand ($s_{ist}$) und von der Relativgeschwindigkeit ($v_{rel}$) berechnet wird,
- **daß** der betragsmäßig größere der beiden Werte der Normalbeschleunigung ($a_n$) und der Grenzbeschleunigung ($a_g$) als anzuwendende Bremsbeschleunigung ($a_b$) bestimmt wird, und
- **daß** das Kraftfahrzeug mit der Bremsbeschleunigung ($a_b$) abgebremst wird.

2. Verfahren nach Anspruch 1, **dadurch gekennzeichnet, daß** der Betrag der Normalbeschleunigung ($a_n$) und/oder der Grenzbeschleunigung ($a_g$) mit steigender Relativgeschwindigkeit ($v_{rel}$) ansteigt.

3. Verfahren nach Anspruch 1 oder 2, **dadurch gekennzeichnet, daß** der Betrag der Normalbeschleunigung ($a_n$) und/oder der Grenzbeschleunigung ($a_g$) mit fallendem Abstand ($s_{ist}$) ansteigt.

4. Verfahren nach einem der Ansprüche 1 bis 3, **dadurch gekennzeichnet, daß** die Normalbeschleunigung ($a_n$) mit Hilfe eines Proportionalitätsreglers mit einem Kennfeld mit zwei Eingangsgrößen ($v_{rel}$, $s_n$-$s_{ist}$) berechnet wird.

5. Verfahren nach Anspruch 4, **dadurch gekennzeichnet, daß** der Wert der Normalbeschleunigung ($a_n$) berechnet wird zu

$$a_n = a_{n,0} + a_{n,1} \cdot \frac{v_{rel}}{s_n - s_{ist}} \qquad \text{für } s_n - s_{ist} > \Delta s_0$$

und

$$a_n = a_{n,max} \qquad \text{für } s_n - s_{ist} \leq \Delta s_0.$$

6. Verfahren nach einem der Ansprüche 1 bis 5, **dadurch gekennzeichnet, daß** die Grenzbeschleunigung ($a_g$) mit Hilfe eines Proportionalitätsreglers mit einem Kennfeld mit zwei Eingangsgrößen ($v_{rel}$, $s_g$-$s_{ist}$) berechnet wird.

7. Verfahren nach Anspruch 6, **dadurch gekennzeichnet, daß** der Wert der Grenzbeschleunigung ($a_g$) berechnet wird zu

$$a_g = a_{g,0} + a_{g,1} \cdot \frac{v_{rel}}{s_g - s_{ist}} \qquad \text{für } s_g - s_{ist} > \Delta s_1$$

und

$$a_g = a_{g,max} \qquad \text{für } s_g - s_{ist} \leq \Delta s_1$$

8. Verfahren nach Anspruch 5 und 7, **dadurch gekennzeichnet, daß** $a_{n,0}$ größer als $a_{g,0}$ gesetzt wird.

9. Verfahren nach Anspruch 5 und 7, **dadurch gekennzeichnet, daß** $a_{n,1}$ kleiner als $a_{g,1}$ gesetzt wird.

10. Verfahren nach einem der Ansprüche 1 bis 9, **dadurch gekennzeichnet, daß** der Normalfolgesollabstand ($s_n$) aus der Geschwindigkeit ($v$) des Kraftfahrzeuges und einer vorgegebenen Normalfolgezeit ($t_n$) berechnet wird.

11. Verfahren nach einem der Ansprüche 1 bis 10, **dadurch gekennzeichnet, daß** der Grenzfolgesollabstand ($s_g$) aus der Geschwindigkeit ($v$) des Kraftfahrzeuges und einer vorgegebenen Grenzfolgezeit ($t_g$) berechnet wird.

12. Verfahren nach einem der Ansprüche 1 bis 11, **dadurch gekennzeichnet, daß** der zeitliche Verlauf der Bremsbeschleunigung ($a_b$) des Kraftfahrzeuges beim Übergang zwischen der Normalbeschleunigung ($a_n$) und der Grenzbeschleunigung ($a_g$) stetig ist.

13. Vorrichtung zur Durchführung eines Verfahrens zur Regelung der Geschwindigkeit eines Kraftfahrzeuges und des Abstandes des Kraftfahrzeuges zu mindestens einem vorausfahrenden Kraftfahrzeug während eines Andockvorganges für eine automatische Distanzregelung, wobei das Kraftfahrzeug eine größere Fahrgeschwindigkeit ($v$) als das vorausfahrende Kraftfahrzeug aufweist,

- mit einer mindestens einen Abstandssensor aufweisenden Erfassungseinrichtung für eine Bestimmung zumindest der Geschwindigkeit ($v$) des Kraftfahrzeuges, der Relativgeschwindigkeit ($v_{rel}$) und des Abstands ($s_{ist}$) zu dem vorausfahrenden Kraftfahrzeug,
- mit einer Auswerteeinheit, die einen ersten Proportionalitätsregler (2) mit einem Kennfeld zur Berechnung einer Normalbeschleunigung ($a_n$) mit zwei Eingangsgrößen nämlich der Differenz zwischen einem vorgegebenen Normalfolge

sollabstand ($s_n$) und dem Abstand ($s_{ist}$) und der Relativ geschwindigkeit ($v_{rel}$) aufweist,

**dadurch gekennzeichnet,**

- **daß** die Auswerteeinheit einen zweiten Proportionalitätsregler (4) mit einem Kennfeld zur Berechnung einer Grenzbeschleunigung ($a_g$) die eine obere Grenze der anzumehmenden Beschleunigungswerte für eine automatische Distanzregelung darstellt mit zwei Eingangsgrößen nämlich der Differenz zwischen einem vorgegebenen Grenzfolgesollabstand ($s_g$) und dem Abstand ($s_{ist}$) und der Relativgeschwindigkeit ($v_{rel}$) aufweist wobei der Grenzfolgeabstand ($s_g$) ein Parameter ist, der an der unteren Grenze eines für die automatische Distanzregelung anzuwendenden Folge sollabstands liegt und
- **daß** die Auswerteeinheit ein Vergleichselement (6) für eine Bestimmung des betragsmäßig größeren der beiden Werte der Normalbeschleunigung ($a_n$) und der Grenzbeschleunigung ($a_g$) aufweist

14. Vorrichtung nach Anspruch 13, **dadurch gekennzeichnet, daß** die Auswerteeinheit den größeren der beiden Werte der Normalbeschleunigung ($a_n$) und der Grenzbeschleunigung ($a_g$) als Wert der Bremsbeschteunigung ($a_b$) ausgibt.

## Claims

1. Method for regulating the velocity of a motor vehicle and the distance of the motor vehicle from at least one motor vehicle travelling ahead during a docking process for an automatic distance regulating operation, the motor vehicle having a higher velocity (v) than the motor vehicle travelling ahead,

   - in which method at least the velocity (v) of the motor vehicle, the relative velocity ($v_{rel}$) and the distance ($s_{act}$) from the motor vehicle travelling ahead are determined using a sensing device which has a distance sensor, and
   - in which the value of a normal acceleration ($a_n$) for a braking operation of the motor vehicle is calculated as a function of the difference between a predefined normal setpoint following distance ($s_n$) and the distance ($s_{act}$) and of the relative velocity ($v_{rel}$) ,

   **characterized**

   - **in that** the value of a limiting acceleration ($a_g$) - which constitutes an upper limit of the acceleration values to be used for an automatic distance regulating operation - is calculated for a braking operation of the motor vehicle as a function of the difference between a predefined limiting setpoint following distance ($s_g$) - which lies at the lower limit of a setpoint following distance to be used for an automatic distance regulating operation - and the distance ($s_{act}$) and of the relative velocity ($v_{rel}$) ,
   - **in that** that value of the two values of the normal acceleration ($a_n$) and of the limiting acceleration ($a_g$) which is higher in terms of absolute value is determined as the braking acceleration ($a_b$) to be used, and
   - **in that** the motor vehicle is braked with the braking acceleration ($a_b$).

2. Method according to Claim 1, **characterized in that** the absolute value of the normal acceleration ($a_n$) and/or of the limiting acceleration ($a_g$) rises as the relative velocity ($v_{rel}$) increases.

3. Method according to Claim 1 or 2, **characterized in that** the absolute value of the normal acceleration ($a_n$) and/or of the limiting acceleration ($a_g$) rises as the distance ($s_{act}$) decreases.

4. Method according to one of Claims 1 to 3, **characterized in that** the normal acceleration ($a_n$) is calculated using a proportionality controller with a characteristic diagram having two input variables ($v_{rel}$, $s_n$-$s_{act}$)

5. Method according to Claim 4, **characterized in that** the value of the normal acceleration ($a_n$) is calculated as

$$a_n = a_{n,0} + a_{n,1} \cdot \frac{v_{rel}}{s_n - s_{act}} \text{ for } s_n - s_{act} > \Delta s_0$$

and

$$a_n = a_{n,\,max} \text{ for } s_n\text{-}s_{act} \leq \Delta s_0.$$

6. Method according to one of Claims 1 to 5, **characterized in that** the limiting acceleration ($a_g$) is calculated using a proportionality controller with a characteristic diagram having two input variables ($v_{rel}$, $s_g$-$s_{act}$).

7. Method according to Claim 6, **characterized in that** the value of the limiting acceleration ($a_g$) is calculated as

$$a_g = a_{g,0} + a_{g,1} \cdot \frac{v_{rel}}{s_g - s_{act}} \text{ for } s_g\text{-} s_{act} > \Delta s_1$$

and

$$a_g = a_{g,max} \text{ for } s_g\text{-}s_{act} \leq \Delta s_1.$$

8. Method according to Claims 5 and 7, **characterized in that** $a_{n,0}$ is set to be greater than $a_{g,0}$.

9. Method according to Claims 5 and 7, **characterized in that** $a_{n,1}$ is set to be smaller than $a_{g,1}$.

10. Method according to one of Claims 1 to 9, **characterized in that** the normal setpoint following distance ($s_n$) is calculated from the velocity (v) of the motor vehicle and a predefined normal following time ($t_n$).

11. Method according to one of Claims 1 to 10, **characterized in that** the limiting setpoint following distance ($s_g$) is calculated from the velocity (v) of the motor vehicle and a predefined limiting following time ($t_g$).

12. Method according to one of Claims 1 to 11, **characterized in that** the time profile of the braking acceleration ($a_b$) of the motor vehicle is continuous at the transition between the normal acceleration ($a_n$) and the limiting acceleration ($a_g$).

13. Device for carrying out a method for regulating the velocity of a motor vehicle and the distance of the motor vehicle from at least one motor vehicle travelling ahead during a docking process for an automatic distance regulating operation, the motor vehicle having a higher velocity (v) than the motor vehicle travelling ahead,

   - having a sensing device, which has at least one distance sensor, for determining at least the velocity (v) of the motor vehicle, the relative velocity ($v_{rel}$) and the distance ($s_{act}$) from the motor vehicle travelling ahead,
   - having an evaluation unit which has a first proportionality controller (2) with a characteristic diagram for calculating a normal acceleration ($a_n$) with two input variables, namely the difference between a predefined normal setpoint following distance ($s_n$) and the distance ($s_{act}$) and the relative velocity ($v_{rel}$),

   **characterized**

   - **in that** the evaluation unit has a second proportionality controller (4) with a characteristic diagram for calculating a limiting acceleration ($a_g$) which constitutes an upper limit of the acceleration values to be assumed for an automatic distance regulating operation with two input variables, specifically the difference between a predefined limiting setpoint following distance ($s_g$) and the distance ($s_{act}$) and the relative velocity ($v_{rel}$), the limiting following distance ($s_g$) being a parameter that lies at the lower limit of a setpoint following distance that is to be used for the automatic distance regulating operation and
   - **in that** the evaluation unit has a comparison element (6) for determining that value of the two values of the normal acceleration ($a_n$) and of the limiting acceleration ($a_g$) which is higher in terms of absolute value.

14. Device according to Claim 13, **characterized in that** the evaluation unit outputs the larger of the two values of the normal acceleration ($a_n$) and of the limiting acceleration ($a_g$) as a value of the braking acceleration ($a_b$).

**Revendications**

1. Procédé de réglage de la vitesse d'un véhicule et de la distance du véhicule par rapport à au moins un véhicule qui le précède au cours d'une opération d'amarrage, en vue d'un réglage automatique de la distance, le véhicule roulant à une vitesse (v) plus élevée que le véhicule qui le précède,

   - selon lequel, à l'aide d'un dispositif de détection présentant un capteur de distance, on détermine au moins la vitesse (v) du véhicule, la vitesse relative ($v_{rel}$) et la distance ($s_{ist}$) par rapport au véhicule précédent, et

   - selon lequel la valeur d'une accélération normale ($a_n$) pour un freinage du véhicule est calculée en fonction de la différence entre une distance de suite de consigne normale ($s_n$) préétablie et la distance ($s_{ist}$) et de la vitesse relative ($v_{rel}$),

   **caractérisé en ce que**

   - la valeur d'une accélération limite ($a_g$), qui représente une limite supérieure des valeurs d'accélération à appliquer en vue d'un réglage automatique de la distance, est calculée en fonction de la différence entre une distance de suite de consigne limite ($s_g$) préétablie qui se situe à la limite inférieure d'une distance de suite de consigne à appliquer en vue d'un réglage automatique de la distance, et la distance ($s_{ist}$), et de la vitesse relative ($v_{rel}$),

   - la plus grande des deux valeurs que sont l'accélération normale ($a_n$) et l'accélération limite

($a_g$) est déterminée en tant qu'accélération de freinage ($a_b$) à appliquer, et

- le véhicule est freiné avec l'accélération de freinage ($a_b$).

2. Procédé selon la revendication 1, **caractérisé en ce que** la valeur de l'accélération normale ($a_n$) et/ou de l'accélération limite ($a_g$) augmente à mesure que la vitesse relative ($v_{rel}$) augmente.

3. Procédé selon la revendication 1 ou 2, **caractérisé en ce que** la valeur de l'accélération normale ($a_n$) et/ou de l'accélération limite ($a_g$) augmente à mesure que la distance ($s_{ist}$) diminue.

4. Procédé selon l'une des revendications 1 à 3, **caractérisé en ce que** l'accélération normale ($a_n$) est calculée à l'aide d'un régulateur proportionnel avec un champ caractéristique avec deux grandeurs d'entrée ($v_{rel}$, $s_n$-$s_{ist}$).

5. Procédé selon la revendication 4, **caractérisé en ce que** la valeur de l'accélération normale ($a_n$) est calculée pour que

$$a_n = a_{n,0} + a_{n,1} \cdot \frac{v_{rel}}{s_n - s_{ist}} \ pour \ s_n - s_{ist} > \Delta s_0$$

et

$$a_n = a_{n,max} \ pour \ s_n - s_{ist} \leq \Delta s_0.$$

6. Procédé selon l'une des revendications 1 à 5, **caractérisé en ce que** l'accélération limite ($a_g$) est calculée à l'aide d'un régulateur proportionnel avec un champ caractéristique avec deux grandeurs d'entrée ($v_{rel}$, $s_g$-$s_{ist}$).

7. Procédé selon la revendication 6, **caractérisé en ce que** la valeur de l'accélération limite ($a_g$) est calculée pour que

$$a_g = a_{g,0} + a_{g,1} \cdot \frac{v_{rel}}{s_g - s_{ist}} \ pour \ s_g - s_{ist} > \Delta s_1$$

et

$$a_g = a_{g,max} \ pour \ s_g - s_{ist} \leq \Delta s_1$$

8. Procédé selon les revendications 5 et 7, **caractérisé en ce que** $a_{n,0}$ est fixée pour être supérieure à $a_{g,\,0}$.

9. Procédé selon les revendications 5 et 7, **caractérisé en ce que** $a_{n,1}$ est fixée pour être inférieure à $a_{g,\,1}$.

10. Procédé selon l'une des revendications 1 à 9, **caractérisé en ce que** la distance de suite de consigne normale ($s_n$) est calculée à partir de la vitesse ($v$) du véhicule et d'un temps de suite normal ($t_n$) préétabli.

11. Procédé selon l'une des revendications 1 à 10, **caractérisé en ce que** la distance de suite de consigne limite ($s_g$) est calculée à partir de la vitesse ($v$) du véhicule et d'un temps de suite limite ($t_g$) préétabli.

12. Procédé selon l'une des revendications 1 à 11, **caractérisé en ce que** l'évolution dans le temps de l'accélération de freinage ($a_b$) du véhicule lors du passage de l'accélération normale ($a_n$) à l'accélération limite ($a_g$) est constante.

13. Dispositif. pour mettre en oeuvre un procédé de réglage de la vitesse d'un véhicule et de la distance du véhicule par rapport à au moins un véhicule qui le précède au cours d'une opération d'amarrage, en vue d'un réglage automatique de la distance, le véhicule roulant à une vitesse ($v$) plus élevée que le véhicule qui le précède,

- comprenant un dispositif de détection présentant au moins un capteur de distance pour déterminer au moins la vitesse ($v$) du véhicule, la vitesse relative ($v_{rel}$) et la distance ($s_{ist}$) par rapport au véhicule précédent,

- une unité d'interprétation présentant un premier régulateur proportionnel (2) avec un champ caractéristique pour calculer une accélération normale ($a_n$) avec deux grandeurs d'entrée, à savoir la différence entre une distance de suite de consigne normale ($s_n$) préétablie et la distance ($s_{ist}$) et la vitesse relative ($v_{rel}$),

**caractérisé en ce que**

- l'unité d'interprétation présente un second régulateur proportionnel (4) avec un champ caractéristique pour calculer une accélération limite ($a_g$) représentant une limite supérieure des valeurs d'accélération à accepter pour un réglage automatique de la distance, avec deux grandeurs d'entrée, à savoir la différence entre une distance de suite de consigne limite ($s_g$) préétablie et la distance ($s_{ist}$) et la vitesse relative ($v_{rel}$), la distance de suite limite ($s_g$) étant un paramètre qui se situe à la limite inférieure d'une distance de suite de consigne à appliquer en vue d'un réglage automatique de la distance, et

- l'unité d'interprétation présente un élément comparateur (6) pour déterminer la plus grande des deux valeurs que sont l'accélération normale ($a_n$) et l'accélération limite ($a_g$).

**14.** Dispositif selon la revendication 13, **caractérisé en ce que** l'unité d'interprétation édite la plus grande des deux valeurs que sont l'accélération normale ($a_n$) et l'accélération limite ($a_g$), en tant que valeur d'accélération de freinage ($a_b$).

**FIG. 1**

**FIG. 2**